# EUROPEAN PATENT SPECIFICATION

(11) **EP 1 282 972 B1**
(45) Date of publication and mention of the grant of the patent: **08.02.2006**
(21) Application number: 01932926.7
(22) Date of filing: 02.05.2001
(51) Int. Cl.: H04L 29/06, H04N 7/173

(54) **AUTOMATICALLY DELAYING CLIENT RESPONSES TO BROADCAST UNIFORM RESOURCE LOCATORS**
AUTOMATISCHEN VERZÖGERUNG VON KUNDENANTWORTEN AUF RUNDGESENDETE URL ADRESSEN
RETARDEMENT AUTOMATIQUE DES REPONSES DE CLIENTS A DES FINS DE DIFFUSION DES DISPOSITIFS DE LOCALISATION DE RESSOURCES UNIFORMES

(30) Priority: 19.05.2000 US 574851
(43) Date of publication of application: 12.02.2003
(73) Proprietor: INTEL CORPORATION, Santa Clara, CA 95052 (US)
(72) Inventor: KINDER, David, Portland, OR 97229 (US); WELSH, Linda, Hillsboro, OR 97121 (US); MO, Stanley, Portland, OR 97210 (US)
(74) Representative: Jacoby, Georg
(86) International application number: PCT/US2001/014260
(87) International publication number: WO 2001/091415

(56) References cited:
- EP-A- 0 917 380
- WO-A-00/74338
- WO-A-01/01232
- WO-A-98/26541
- "Advanced Television Enhancement Forum Specification (ATVEF), Comment Draft Version 1.0r1, (25/02/99)" ATVF, 25 February 1999 (1999-02-25), XP002142688

## Description

### Background

This invention relates generally to the Internet and the use of uniform resource locators.

Television programs and commercials often invite viewers to visit a web server to get information or buy something. If each of the millions of television viewers responded to the enticement at the same time, they would quickly overwhelm the transaction capacity of most web servers.

For example, during the 1999 Super Bowl football game, a Victoria's Secret television commercial solicited viewers to visit its web site. The television program displayed a web site uniform resource locator. Millions of viewers saw the uniform resource locator at precisely the same time and many of them immediately attempted to contact the web server. The web server failed to respond to such requests because the web server was unable to deal with the large number of simultaneous web site access requests.

Even when web proxy servers are utilized to mirror origin servers to distribute the load, failures may occur because the capacity of the proxy servers is also exceeded. In addition, there may be a problem with establishing the needed number of telephony connections to the user's Internet service provider because the capacity of the Internet service provider's modem bank has been reached.

These failures result in frustration to users and lost opportunities for broadcasters and advertisers to gain revenue and viewer satisfaction. In some cases, these lost connections may be expensive, especially in Europe and Asia, where Internet service provider connection time is metered.

Thus, there is a need to reduce the overloading of web servers when a large number of users attempt to contact the server at the same time.

In WO 00/74338, published on 7 December 2000, a system for management of communications bandwidth utilization is disclosed in which delays are deliberately introduced when responding to requests for resources. The delays are initiated by the system which responds to the requests.

In WO 01/01232, published on 4 January 2001, an interactive television receiver is disclosed which waits a period of time before sending its request to a server to prevent that a great number of users accesses the server at the same time. A delay period is determined by a script.

In EP 0917380, an information transmission control apparatus is disclosed which distributes information to a plurality of information reception apparatuses at different points of time in order to prevent that many information reception apparatuses send a response to the information at the same time. The latter case would occur if the information was sent to all information reception apparatuses at the same time.

The present invention provides a further solution to the problem of a plurality of clients simultaneously requesting access to a server.

### Brief Description to the Drawings

Figure 1 is a schematic depiction of one embodiment of the prevent invention;
Figure 2 is a screen display that may be utilized in accordance with one embodiment of the present invention;
Figure 3 is software that may be included on the client in one embodiment of the present invention; and
Figure 4 is a block diagram of a client in accordance with one embodiment of the present invention.

### Detailed Description

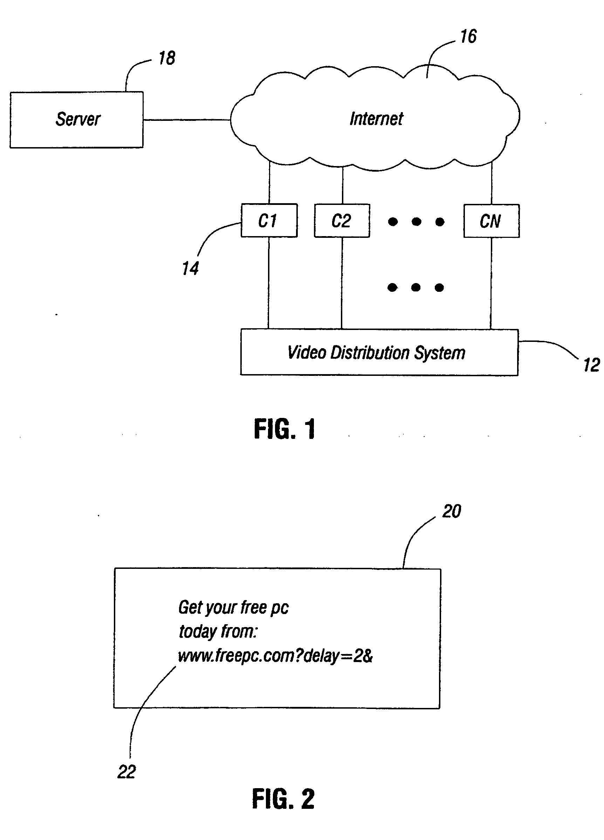

Referring to Figure 1, a video distribution system 12 may be any of a variety of systems that distribute video such as television programming. For example, the system 12 may be an airwave broadcast system, a satellite distribution system, or a cable distribution system. The system 12 may also be an Internet based distribution system in another embodiment of the present invention. A plurality of clients, indicated as 14, may receive the video distributed by the system 12. Each client 14 may be a processor-based system. Thus, in some cases, each client 14 may receive the video information at the same time.

Referring to Figure 2, an exemplary screen display 20 for a client 14 is illustrated. In this hypothetical example, a television program offers viewers the opportunity to receive a free personal computer. The advertisement gives a uniform resource locator (URL) 22 to contact for additional information.

If a large number of viewers learn about a given opportunity (and a given URL) at the same time, many viewers may attempt to contact the web server 18 associated with the URL at the same time. In some cases, this may cause the server 18 to fail, resulting in frustration for a large number of potential users. This may cause lost revenues where the users are potential customers.

If each of the owners of a client 14 attempts to contact the server 18 over the Internet 16 at the same time, the server may be unable to handle the load. In accordance with one embodiment of the present invention, access delays may be incorporated into the clients 14 to spread the demand on the server 18 over a time interval. For example, the URL 22 indicated in Figure 2 may include the additional instructions "?delay=2&". The material between the tags ? and & are recognized as providing additional comments conventionally directed to the server. The additional instructions do not in any way affect the preceding web address. The instructions may include a name and a delay value. In this example, the name is "delay" and the delay value is "two". The parameters in the additional instructions may be utilized by the client 14 to provide a delay between the time the user enters the URL into the user's Internet browser and the time that the browser actually proceeds to contact the web server 18.

The length and nature of the delay is subject to considerable variation. For example, in one embodiment of the present invention, the value provided within the tags may provide an indicator that works with browser software on the client 14 to produce a desired delay. The browser software on the client side processor-based system may utilize the delay value in different ways. For example, depending on the intended or expected load on the server, different extents of delay may be provided. If the highest number of access attempts is expected, the longest delay periods may be assigned. Conversely, if a large load is expected but less than the highest load, a lower delay period may be provided. Thus, the delay value provided between the tags may be used to determine the delay time.

Within the delay period, the client side software may institute a selectable or variable delay. Thus, for extremely high loads, a delay period of between zero and X seconds may be implemented and for smaller loads a delay period of between zero and X/2 seconds may be provided. In one embodiment of the present invention, the exact delay within the delay period may be chosen randomly so that the load is distributed over the delay period. The random delay generation may be implemented on the client 14.

In another example, the delay may be predefined so that each client 14, having recognized the delay instructions demarked by the tags ? and &, may immediately institute a predetermined delay. This predetermined delay may have been preassigned to that system in one embodiment.

As still another example, the delay settings may be pre-transmitted to the client 14. In one embodiment of the present invention, that information may be provided as part of a trigger in a digital broadcast. A trigger is used to identify a URL in an announcement. An announcement announces the availability of the interactive television capability. See Advanced Television Enhancement Forum (ATVEF) Specification, Version 1.1r.26, February 2, 1999.

Once the delay is initiated, the user may be advised of the waiting period. For example, the client 14 may display a screen display which shows a countdown indicator indicating the remaining time before access is attempted.

After the delay period, the client 14 automatically contacts the server 18. By distributing the attempted contacts over a time period, the effectiveness of the overall system may be enhanced without unduly prejudicing any given user.

The software responsible for implementing the delay may be loaded on the client 14 in a number of ways. As one example, it may be downloaded as script with the permission of the client 14 as one example. As another example, the software may also be provided as a part of the browser software utilized by client 14 as a selectable option in accordance with another embodiment of the present invention. As still another example, the software may also be provided with certain processor-based systems such as those provided as free personal computers. For example, in a free personal computer system provided by a Internet service provider, the Internet service provider may prefer to initiate delays in accessing a given web site (such as its own) under certain circumstances.

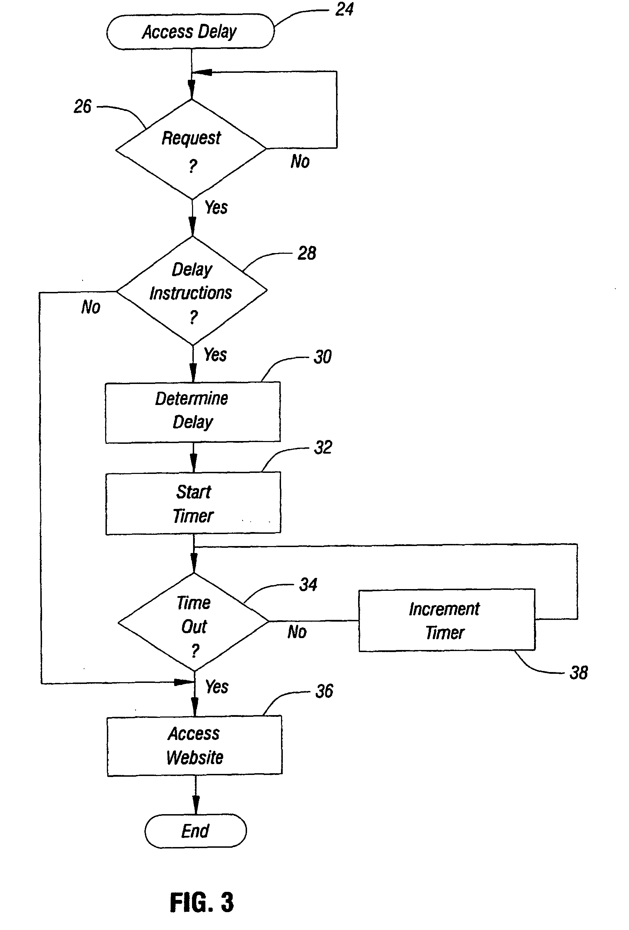

Referring to Figure 3, the access delay software 24 on the client 14 initially determines whether a uniform resource locator has been entered as indicated in diamond 26 in accordance with one embodiment of the present invention. If so, the software 24 may check for delay instructions as indicated in diamond 28. In one embodiment of the present invention illustrated in Figure 2, these delay instructions may be included as part of the URL. If no such delay instructions are found, in one embodiment of the present invention, the request is sent immediately. In other embodiments, an automatic delay may be entered without instructions.

If delay instructions are included with the URL, a delay is determined as indicated in block 30. The delay may be determined by parsing the delay instructions from the URL to get a delay setting. For example, the delay setting may be one of the numbers from one to four which provides information to the client side software 24 about the extent of the delay period. The extent of the delay period may correspond to the expected load on a given web site under particular circumstances.

Once the delay information is decoded, the active delay time (within the delay period) may be set. The delay time may be set using a random number generator to randomly pick a delay time within predetermined boundaries. Alternatively, the delay may be set based on predefined instructions for a particular client 14.

Having determined the delay time, a timer may be started as indicated in block 32. A check at diamond 34 determines whether the timer has timed out. If not, the timer is incremented as indicated in block 38. Otherwise, once a time out occurs, the web site is automatically accessed as indicated in block 36.

As a result, every attempted Internet web site access attempt is not delayed in one embodiment of the present invention. Instead, only those access attempts involving URLs with delay instructions may trigger the delays.

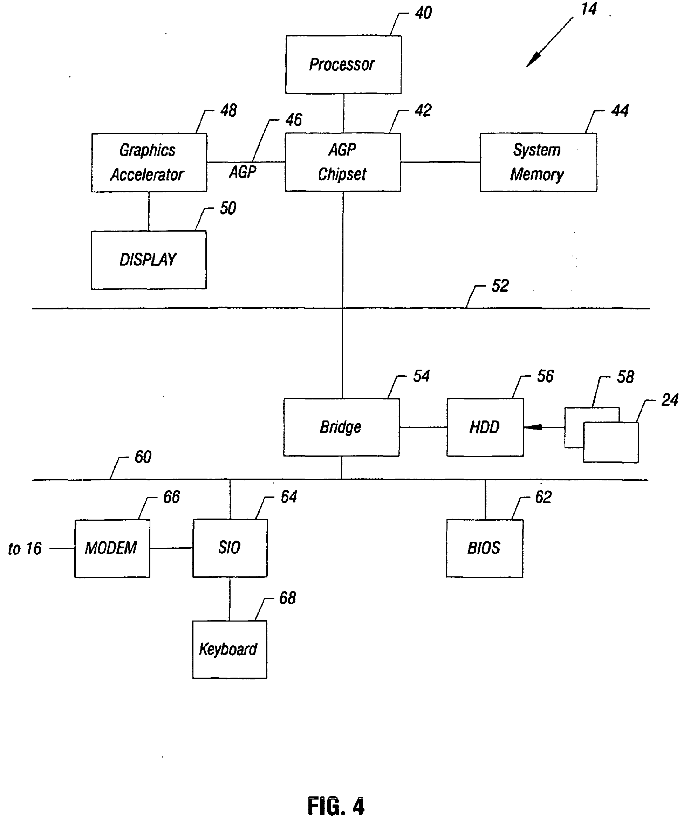

Referring to Figure 4, one embodiment of a client 14 includes a processor 40. The client 14 may be any of a wide variety of processor-based systems. Examples of such systems include desktop computers, mobile computers, set-top boxes, personal digital assistants, cellular telephones, appliances, and any other device having information handling capabilities.

In the embodiment illustrated in Figure 4, the processor 40 may be coupled to an accelerated graphics port chipset 42. The chipset 42 couples system memory 44 to an accelerated graphics port 46. The port 46 in turn couples a graphics accelerator 48 and a display 50.

The chipset 42 is also coupled to a bus 52, in turn connected to a bridge 54. A hard disk drive 56 may store software 58 and 24. The software 58 may, for example, be an Internet browser application.

The bridge 54 is coupled to another bus 60 which may be coupled to a memory 62 that stores a basic input/output system (BIOS). The bus 60 also couples a serial input/output device 64. The device 64 communicates with a modem 66 and a keyboard 68. The modem 66 may be any of a variety of modems which enable access to the Internet over a telephone, a cable or satellite system, as examples.

In one embodiment of the present invention the client 14 may be a set-top box and the display 50 may be a television receiver. The set-top box may include the capability to tune to television programming provided over a television distribution system. Thus, the user may receive television programming and may automatically select a URL displayed on the television screen as one example. The URL selection may be accomplished using a remote control unit for example.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. A method comprising:
receiving a user request including a uniform resource locator (22) at a client (14) to access a web server (18), and
automatically delaying accessing the web server (18) from the client (14) based on a delay information to prevent overloading the web server (18),
**characterized by**
extracting said delay information from said uniform resource locator (22).

2. The method of claim 1 wherein the uniform resource locator (22) is received in a browser.

3. The method of claim 1 or 2 wherein automatically delaying accessing the web server (18) includes initiating a randomly determined delay.

4. The method of claim 3 wherein said delay information is a maximum delay period.

5. The method of claim 1 or 2 including setting the delay time for a given user based on said delay information.

6. The method of any one of the preceding claims including receiving television programming information together with a trigger containing said uniform resource locator (22) and said delay information for delaying accessing the web server (18).

7. The method of any one of the preceding claims including initiating a timer based on said delay information and accessing the web server (18) when the time expires.

8. The method of any one of the preceding claims including receiving a user request to access a web server (18) and accessing the web server (18) without delay when the request does not include delay instructions.

9. A computer readable medium storing instructions that when executed by a computer cause the computer to perform the following steps:
receiving a user request including a uniform resource locator (22) at a client (14) to access a web server (18), and
automatically delaying accessing the web server (18) from the client (14) based on a delay information to prevent overloading the web server (18)
**characterized in that**
said instructions cause the computer to extract said delay information from said uniform resource locator (22).

10. The medium of claim 9 further storing instructions that cause the computer to receive a user request to access a web server (18) and to access the web server (18) without delay when the request does not include delay instructions.

11. The medium of claim 9 or 10 further storing instructions that cause the computer to receive said uniform resource locator (22) in a browser.

12. The medium of any one of claims 9 to 11 further storing instructions that cause the computer to initiate a delay which is randomly determined on the basis of said delay information.

13. The medium of any one of claims 9 to 12 further storing instructions that cause the computer to set the delay time for a given user based on said delay information.

14. The medium of any one of claims 9 to 13 further storing instructions that cause the computer to receive television programming information together with a trigger containing said uniform resource locator (22) and said delay information.

15. The medium of any one of claims 9 to 14 further storing instructions that cause the computer to initiate a timer based on said delay information and to access the web server (18) when the time expires.

16. The medium of any one of claims 9 to 15 further storing instructions that cause the computer to receive a user request to access a web server (18) and to access the web server (18) without delay.

17. A client system comprising:
a processor; and storage coupled to said processor, said storage storing instructions that cause said client system to receive a user request including a uniform resource locator (22) to access a web server (18), and to automatically delay accessing said web server (18) from the client system (14) based on a delay information to prevent overloading the web server (18),
**characterized in that**
said instructions cause said client system to extract said delay information from said uniform resource locator (22).

18. The system of claim 17 wherein said system is a set-top box.

19. The system of claim 17 or 18 wherein said storage stores instructions that cause the system to receive a user request to access a web server (18) and to access the web server (18) without delay when the request does not include delay instructions.

20. The system of any one of claims 17 to 19 wherein said storage stores a browser and said browser receives said uniform resource locator (22) associated with said server (18).

21. The system of any one of claims 17 to 20 wherein said storage stores instructions that cause the uniform resource locator (22) to be parsed to separate the delay instructions.

22. The system of any one of claims 17 to 21 wherein said storage stores instructions that cause the system to initiate a delay which is randomly determined on the basis of the delay information.

23. The system of any of claims 17 to 22 including a software timer which determines when to access said web server (18).

## Patentansprüche

1. Verfahren, welches umfasst:
Empfangen einer Benutzeranfrage, die einen Uniform Resource Locator (22) umfasst, bei einem Client (14), um auf einen Web-Server (18) zuzugreifen, und
Automatisches Verzögern des Zugreifens auf den Web-Server (18) vom Client (14) aus auf der Grundlage einer Verzögerungsinformation, um ein Überlasten des Web-Servers (18) zu verhindern,
**gekennzeichnet durch**
Extrahieren der Verzögerungsinformation aus dem Uniform Resource Locator (22).

2. Verfahren nach Anspruch 1, wobei der Uniform Resource Locator (22) in einem Browser empfangen wird.

3. Verfahren nach Anspruch 1 oder 2, wobei das automatische Verzögern des Zugreifens auf den Web-Server (18) ein Auslösen einer zufällig bestimmten Verzögerung umfasst.

4. Verfahren nach Anspruch 3, wobei die Verzögerungsinformation eine maximale Verzögerungszeitdauer ist.

5. Verfahren nach Anspruch 1 oder 2, welches ein Setzen der Verzögerungszeit für einen gegebenen Benutzer auf der Grundlage der Verzögerungsinformation umfasst.

6. Verfahren nach einem der vorhergehenden Ansprüche, welches ein Empfangen von Fernsehprogramminformation zusammen mit einem Auslöser umfasst, der den Uniform Resource Locator (22) und die Verzögerungsinformation zum Verzögern des Zugreifens auf den Web-Server (18) umfasst.

7. Verfahren nach einem der vorhergehenden Ansprüche, welches ein Auslösen eines Zeitmessers auf der Grundlage der Verzögerungsinformation und ein Zugreifen auf den Web-Server (18) umfasst, wenn die Zeit abläuft.

8. Verfahren nach einem der vorhergehenden Ansprüche, welches ein Empfangen einer Benutzeranfrage, um auf einen Web-Server (18) zuzugreifen, und ein Zugreifen auf den Web-Server (18) ohne Verzögerung umfasst, wenn die Anfrage keine Verzögerungsinstruktionen umfasst.

9. Computerlesbares Medium, welches Instruktionen speichert, die, wenn sie von einem Computer ausgeführt werden, den Computer veranlassen, die folgenden Schritte durchzuführen:
Empfangen einer Benutzeranfrage, die einen Uniform Resource Locator (22) umfasst, bei einem Client (14), um auf einen Web-Server (18) zuzugreifen, und
Automatisches Verzögern des Zugreifens auf den Web-Server (18) vom Client (14) aus auf der Grundlage einer Verzögerungsinformation, um ein Überlasten des Web-Servers zu verhindern
**dadurch gekennzeichnet, dass**
die Instruktionen den Computer veranlassen, die Verzögerungsinformation aus dem Uniform Resource Locator (22) zu extrahieren.

10. Medium nach Anspruch 9, welches ferner Instruktionen speichert, welche den Computer veranlassen, eine Benutzeranfrage zu empfangen, um auf einen Web-Server (18) zuzugreifen und um auf den Web-Server (18) ohne Verzögerung zuzugreifen, wenn die Anfrage keine Verzögerungsinstruktionen umfasst.

11. Medium nach Anspruch 9 oder 10, welches ferner Instruktionen speichert, die den Computer veranlassen, den Uniform Resource Locator (22) in einem Browser zu empfangen.

12. Medium nach einem der Ansprüche 9 bis 11, welches ferner Instruktionen speichert, die den Computer veranlassen, eine Verzögerung auszulösen, die zufällig auf der Grundlage der Verzögerungsinformation bestimmt wird.

13. Medium nach einem der Ansprüche 9 bis 12, welches ferner Instruktionen speichert, die den Computer veranlassen, die Verzögerungszeit für einen gegebenen Benutzer auf der Grundlage der Verzögerungsinformation zu setzen.

14. Medium nach einem der Ansprüche 9 bis 13, welches ferner Instruktionen speichert, die den Computer veranlassen, Fernsehprogramminformation zusammen mit einem Auslöser, der den Uniform Resource Locator (22) und die Verzögerungsinformation umfasst, zu empfangen.

15. Medium nach einem der Ansprüche 9 bis 14, welches ferner Instruktionen speichert, die den Computer veranlassen, einen Zeitmesser auf der Grundlage der Verzögerungsinformation auszulösen und um auf den Web-Server (18) zuzugreifen, wenn die Zeit abläuft.

16. Medium nach einem der Ansprüche 9 bis 15, welches ferner Instruktionen speichert, die den Computer veranlassen, eine Benutzeranfrage zu empfangen, um auf einen Web-Server (18) zuzugreifen und um auf den Web-Server (18) ohne Verzögerung zuzugreifen.

17. Client-System, welches umfasst:
einen Prozessor, und
einen Speicher, der an den Prozessor gekoppelt ist, wobei der Speicher Instruktionen speichert, die das Client-System veranlassen, eine Benutzeranfrage zu empfangen, welche einen Uniform Resource Locator (22) umfasst, um auf einen Web-Server (18) zuzugreifen, und um automatisch das Zugreifen auf den Web-Server (18) vom Client-System (14) aus auf der Grundlage einer Verzögerungsinformation zu verzögern, um ein Überlasten des web-Servers (18) zu verhindern,
**dadurch gekennzeichnet, dass**
die Instruktionen das Client-System veranlassen, die Verzögerungsinformation aus dem Uniform Resource Locator (22) zu extrahieren.

18. System nach Anspruch 17, wobei das System eine Set-Top Box ist.

19. System nach Anspruch 17 oder 18, wobei der Speicher Instruktionen speichert, die das System veranlassen, eine Benutzeranfrage zu empfangen, um auf einen Web-Server (18) zuzugreifen und um auf den Web-Server (18) ohne Verzögerung zuzugreifen, wenn die Anfrage keine Verzögerungsinstruktionen umfasst.

20. System nach einem der Ansprüche 17 bis 19, wobei der Speicher einen Browser speichert und der Browser den Uniform Resource Locator (22) empfängt, der dem Server (18) zugeordnet ist.

21. System nach einem der Ansprüche 17 bis 20, wobei der Speicher Instruktionen speichert, die veranlassen, dass der Uniform Resource Locator (22) geparst wird, um die Verzögerungsinstruktionen abzutrennen.

22. System nach einem der Ansprüche 17 bis 21, wobei der Speicher Instruktionen speichert, die das System veranlassen, eine Verzögerung auszulösen, die zufällig auf der Grundlage der Verzögerungsinformation bestimmt wird.

23. System nach einem der Ansprüche 17 bis 22, welches einen Software-Zeitmesser umfasst, der bestimmt, wann auf den Web-Server (18) zugegriffen wird.

## Revendications

1. Procédé comprenant :
une réception d'une demande d'utilisateur comprenant un dispositif de localisation de ressources uniformes (22) chez un client (14) pour accéder à un serveur web (18), et
un retardement automatique de l'accès au serveur web (18) du client (14) sur la base de ladite information de retard pour éviter une surcharge du serveur web (18),
**caractérisé par**
une extraction d'une information de retard à partir dudit dispositif de localisation de ressources uniformes (22).

2. Procédé selon la revendication 1, dans lequel le dispositif de localisation de ressources uniformes (22) est reçu dans un navigateur.

3. Procédé selon l'une quelconque des revendications 1 ou 2, dans lequel le retardement automatique de l'accès au serveur web (18) comprend le lancement d'un retard déterminé de manière aléatoire.

4. Procédé selon la revendication 3, dans lequel ladite information de retard est une période de retard maximum.

5. Procédé selon l'une quelconque des revendications 1 ou 2, comprenant l'établissement du temps de retard pour un utilisateur donné sur la base de ladite information de retard.

6. Procédé selon l'une quelconque des revendications précédentes, comprenant la réception d'une information de programmation de télévision avec un dispositif de déclenchement contenant ledit dispositif de localisation de ressources uniformes (22) et ladite information de retard afin de retarder l'accès au serveur web (18).

7. Procédé selon l'une quelconque des revendications précédentes, comprenant le lancement d'un temporisateur sur la base de ladite information de retard et l'accès au serveur web (18) quand la durée a expiré.

8. Procédé selon l'une quelconque des revendications précédentes, comprenant la réception d'une demande d'utilisateur pour accéder à un serveur web (18) et l'accès au serveur web (18) sans retard quand la demande ne comprend pas d'instructions de retard.

9. Support pouvant être lu par un ordinateur stockant des instructions qui, quand elles sont exécutées par un ordinateur, font que l'ordinateur exécute les étapes suivantes :
la réception d'une demande d'utilisateur comprenant un dispositif de localisation de ressources uniformes (22) chez un client (14) pour accéder à un serveur web (18), et
un retardement automatique de l'accès au serveur web (18) du client (14) sur la base d'une information de retard pour éviter une surcharge du serveur web (18)
**caractérisé en ce que**
lesdites instructions font que l'ordinateur extrait ladite information de retard à partir dudit dispositif de localisation de ressources uniformes (22).

10. Support selon la revendication 9, stockant de plus des instructions qui font que l'ordinateur reçoit une demande d'utilisateur pour accéder à un serveur web (18) et accède au serveur web (18) sans retard lorsque la demande ne comprend pas d'instructions de retard.

11. Support selon l'une quelconque des revendications 9 ou 10, stockant de plus des instructions qui font que l'ordinateur reçoit ledit dispositif de localisation de ressources uniformes (22) dans un navigateur.

12. Support selon l'une quelconque des revendications 9 à 11, stockant de plus des instructions qui font que l'ordinateur lance un retard qui est déterminé de manière aléatoire sur la base de ladite information de retard.

13. Support selon l'une quelconque des revendications 9 à 12, stockant de plus des instructions qui font que l'ordinateur fixe le temps de retard pour un utilisateur donné sur la base de ladite information de retard.

14. Support selon l'une quelconque des revendications 9 à 13, stockant de plus des instructions qui font que l'ordinateur reçoit une information de programmation de télévision avec un dispositif de déclenchement contenant ledit dispositif de localisation de ressources uniformes (22) et ladite information de retard.

15. Support selon l'une quelconque des revendications 9 à 14, stockant de plus des instructions qui font que l'ordinateur lance un temporisateur sur la base de ladite information de retard et accède au serveur web (18) quand la durée a expiré.

16. Support selon l'une quelconque des revendications 9 à 15, stockant de plus des instructions qui font que l'ordinateur reçoit une demande d'utilisateur pour accéder à un serveur web (18) et accède au serveur web (18) sans retard.

17. Système client comprenant :
un processeur ; et
un stockage couplé audit processeur, ledit stockage stockant des instructions qui font que ledit système client reçoit une demande d'utilisateur comprenant un dispositif de localisation de ressources uniformes (22) pour accéder à un serveur web (18), et retarde automatiquement l'accès audit serveur web (18) du système client (14) sur la base d'une information de retard pour éviter une surcharge du serveur web (18),
**caractérisé en ce que**
lesdites instructions font que ledit système client extrait ladite information de retard à partir dudit dispositif de localisation de ressources uniformes (22).

18. Système selon la revendication 17, dans lequel ledit système est un boîtier décodeur.

19. Système selon l'une quelconque des revendications 17 ou 18, dans lequel ledit stockage stocke des instructions qui font que le système reçoit une demande d'utilisateur pour accéder à un serveur web (18) et accède au serveur web (18) sans retard lorsque la demande ne comprend pas d'instructions de retard.

20. Système selon l'une quelconque des revendications 17 à 19, dans lequel ledit stockage stocke un navigateur et ledit navigateur reçoit ledit dispositif de localisation de ressources uniformes (22) associé audit serveur (18).

21. Système selon l'une quelconque des revendications 17 à 20, dans lequel ledit stockage stocke des instructions qui font que le dispositif de localisation de ressources uniformes (22) est décomposé pour séparer les instructions de retard.

22. Système selon l'une quelconque des revendications 17 à 21, dans lequel ledit stockage stocke des instructions qui font que le système lance un retard qui est déterminé de manière aléatoire sur la base des informations de retard.

23. Système selon l'une quelconque des revendications 17 à 22, comprenant un temporisateur logiciel qui détermine le moment où accéder audit serveur web (18).
